# EUROPEAN PATENT APPLICATION

(11) **EP 1 974 986 A2**
(43) Date of publication of application: **01.10.2008**
(21) Application number: 08152995.0
(22) Date of filing: 19.03.2008
(51) Int. Cl.: B60N 2/12

(54) **Seat device for vehicle**

(30) Priority: 30.03.2007 JP 2007090582
(71) Applicant: AISIN SEIKI KABUSHIKI KAISHA, Kariya-shi, Aichi-ken 448-8650 (JP)
(72) Inventor: Kojima, Yasuhiro c/o Aisin Seiki Kabushiki Kaisha, Kariya-shi Aichi 448-8650 (JP); Nihonmatsu, Hideo c/o Aisin Engineering Co., Ltd., Kariya-shi Aichi 448-8605 (JP); Nagura, Mikihito c/o T-Plan Co., Ltd., Okazaki-shi Aichi 444-2121 (JP)
(74) Representative: TBK-Patent

(57) **Abstract**

A seat device for a vehicle includes a lower frame, a slide mechanism (10, 20), a reclining mechanism (80) for supporting a seatback relative to a seat cushion with a reclined angle and holding the seatback to a predetermined position, a slide lock mechanism (30) for restricting the movement of the lower frame and holding a seat to a predetermined position relative to a vehicle floor and a walk-in mechanic (60) disposed between the reclining mechanism (80) and the slide lock mechanism (30) for releasing the restriction of the movement of the lower frame by operating the slide lock mechanism in association with the reclining movement of the seat. The walk-in mechanism (60) includes a first link (63) rotatably supported by the shaft member and operatively connected to the reclining mechanism (80) and the slide lock mechanism to transmit a power from the reclining operation of the seatback to the slide lock operation of the slide lock mechanism (30).

## Description

### FIELD OF THE INVENTION

This invention generally relates to a seat device for a vehicle, and more particularly to a seat device with a walk-in mechanism, which slides a seat in a front direction relative to a vehicle floor, associated with a frontward movement of a seat back (reclining operation).

### BACKGROUND

A conventional walk-in mechanism of a seat device is disclosed in a published patent brochure WO06/030539. The walk-in mechanism is operated in association with a slide lock mechanism, which holds a vehicle seat to a preset position when the seat is moved in a front/rearward direction, by a slide mechanism relative to the vehicle floor and a reclining mechanism through a link mechanism.

This conventional walk-in mechanism is operated by releasing the slide lock mechanism to allow the seat to be movable in the front/rear direction by reclining the seat back with the seat reclining mechanism.

Some types of the seat device include a seat lifter mechanism, which moves the seat cushion in a vertical direction relative to the vehicle floor. The seat lifter mechanism is provided between a lower frame of the seat device and the slide mechanism in order to make a simple structure seat. This position of the seat lifter mechanism may sometimes interfere with the walk-in mechanism, which is cooperated, with the slide mechanism and the slide lock mechanism. Particularly, an extension of a shaft is provided in the seat lifter mechanism for transmitting force in both right and left directions. The extension of the shaft may interfere the operation of the walk-in mechanism.

According to the walk-in mechanism disclosed in the published patent brochure WO06/030539, a link mechanism for connecting the reclining mechanism and the slide lock mechanism is provided outside of the extension of the shaft to avoid the interference with the walk-in mechanism.

A need thus exists for a seat device, which is not susceptible to the drawback mentioned above.

### SUMMARY OF THE INVENTION

In light of the foregoing, the present invention provides a seat device for a vehicle, which includes a lower frame adapted to be mounted for supporting a seat cushion and a seat back of a seat and including a shaft member extending in a width direction of the seat, a slide mechanism adapted to be mounted between the lower frame and a vehicle floor for movably supporting the seat in a front/rearward direction relative to the vehicle floor, a reclining mechanism adapted to be mounted between the lower frame and the seat back for supporting the seat back relative to the seat cushion with a reclined angle and holding the seat back to a predetermined position relative to the seat cushion, a slide lock mechanism mounted on the slide mechanism for restricting the movement of the lower frame and holding the seat to a predetermined position relative to the vehicle floor, and a walk-in mechanism disposed between the reclining mechanism and the slide lock mechanism for releasing the restriction of the movement of the lower frame by operating the slide lock mechanism in association with the reclining movement of the seat, the walk-in mechanism including a first link rotatably supported by the shaft member and operatively connected to the reclining mechanism and the slide lock mechanism to transmit a power from the reclining operation of the seat back to the slide lock operation of the slide lock mechanism.

According to the invention, since the link for transmitting the reclining operation to slide lock-releasing operation can be rotatably supported on the shaft member, the interference between the walk-in mechanism and the shaft member can be avoided. Thus the arrangement of the walk-in mechanism can be easily achieved without considering the position of the shaft member. This will improve the design freedom for providing various seat function mechanisms such as walk-in operation, sliding operation, and reclining operation.

A seat device for a vehicle according to another aspect of the invention, the first link includes a link body and fixing member assembled to the link body and divided into two parts in an outer peripheral direction relative to the shaft member.

Since the link of the walk-in mechanism is divided into two parts in an outer peripheral direction of the shaft member, the assembling of the shaft member to the link can be easily achieved.

A seat device according to still another aspect of the invention, the walk-in mechanism further includes a walk-in plate rotatably supported around a hinge axis of the reclining mechanism and connected to the link body of the first link and a second link rotatably supported on an upper rail of the slide mechanism and operatively connected to the slide lock mechanism and the link body.

As mentioned, since the shaft member rotatably supports the link of the walk-in mechanism, the operation of the shaft member, which is the main element of the lifter mechanism, can be followed by the operation of the link, which is the main element of the walk-in mechanism. This can avoid interference with the walk-in mechanism under any operational condition of the lifter mechanism, which may improve the design freedom of the seat structure.

### BRIEF DESCRIPTION OF THE DRAWINGS

The foregoing and additional features and characteristics of the present invention will become more apparent from the following detailed description considered with reference to the accompanying drawings, wherein:

Fig. 1 is a perspective view of a vehicle seat device according to one embodiment of the invention;

Fig. 2 is an exploded perspective view of a pair of lower rails and a pair of upper rails according to the embodiment shown in Fig. 1;

Fig. 3 is a cross sectional view of the pair of lower rails and the pair of upper rails according to the embodiment shown in Fig. 2;

Fig. 4 is a side view of the vehicle seat device according to the embodiment shown in Fig. 1, wherein the seat cushion is in neutral position and the walk-in mechanism is not operated;

Fig. 5 is a partially exploded view of a support shaft member of the lifter mechanism and a first link of the walk-in mechanism according to the embodiment of the invention shown in Fig. 1;

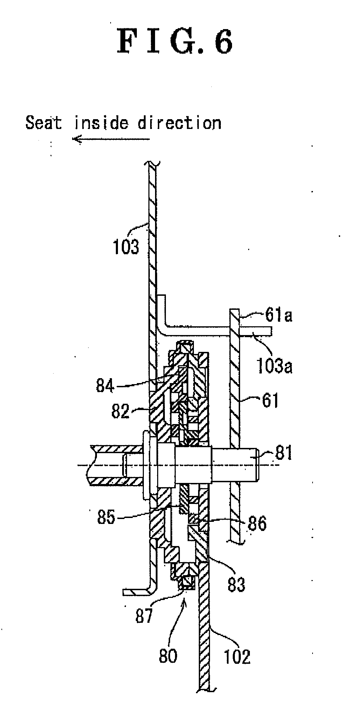

Fig. 6 is a partially exploded view of the reclining mechanism and the walk-in mechanism according to the embodiment of the invention shown in Fig. 1;

Fig. 7 is a side view of the vehicle seat device according to the embodiment shown in Fig. 1, wherein the seat cushion is in a neutral position and the walk-in mechanism is operated;

Fig. 8 is a side view of the vehicle seat device according to the embodiment shown in Fig. 1, wherein the seat cushion is in high position and the walk-in mechanism is not operated; and

Fig. 9 is a side view of the vehicle seat device according to the embodiment shown in Fig. 1, wherein the seat cushion is in low position and the walk-in mechanism operated.

### DETAILED DESCRIPTION

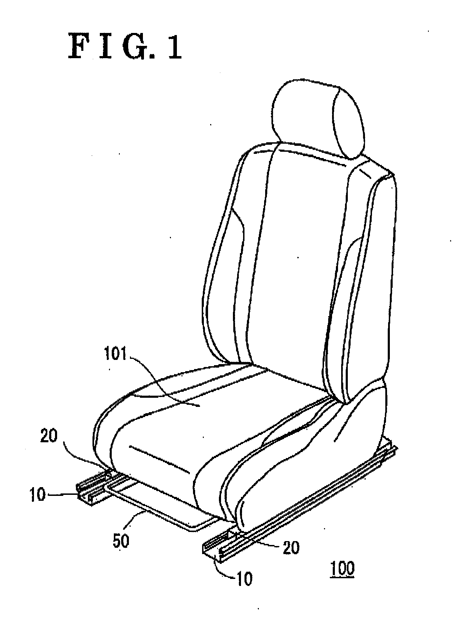

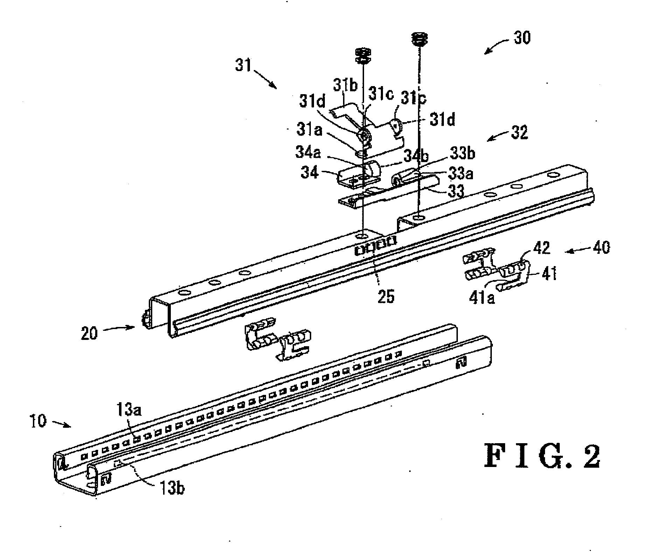

As illustrated in Fig. 1 and Fig. 2, the seat device according to the embodiment of the present invention includes a pair of lower rails 10 secured to a vehicle floor 100 and extending in a vehicle front/rear direction and a pair of upper rails 20 provided movably relative to the pair of lower rails in the vehicle front/rear direction. The seat device further includes a slide lock mechanism 30 for locking the upper rails 20 to the lower rails and a handle 50 for operating a releasing lever (not shown) for releasing the locking condition between the upper and lower rails 20, 10. Fig. 1 shows a perspective view of the seat device and Fig. 2 shows an exploded perspective view of the combination of the pair of lower rails 10, the pair of upper rails 20 and the slide lock mechanism 30, but showing the left side part only for simplifying the explanation.

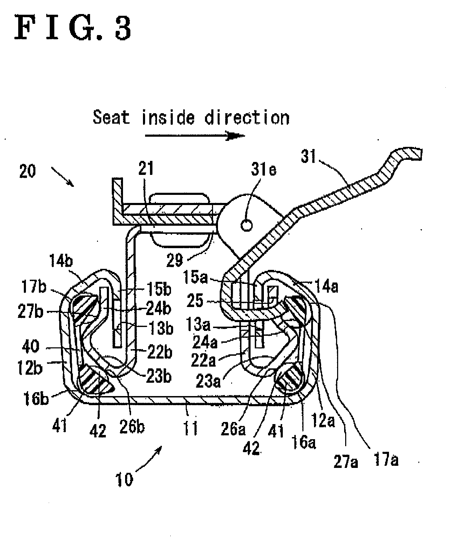

As shown in Fig. 2 and Fig. 3, a series of lock holes 13a and 13b of the slide lock mechanism 30, is provided in the lower rail 10 in a longitudinal direction of the vehicle. The lower rail 10 includes a base bottom 1 provided parallel to the vehicle floor 100 (shown in Fig. 1), a first inside portion 12a and a second outside portion 12b upwardly extending from the right and left side ends of the base bottom 11 respectively, upper portions 14a and 14b extending inwardly from the upper ends of the first inside portion 12a and the second outside portion 12b, respectively and second side portions 15a and 15b extending downwardly from the inward ends of the upper portions 14a and 14b. The lock holes 13a and 13b are provided at the first inside portion. 12a and the second outside portion 12b, respectively. Sliding portions 16a, 16b, 17a and 17b are provided between the base bottom 11 and the first inside portion 12a and the second outside portion 12b, and between the first inside portion 12a and the second outside portion 12b and the upper portions 14a and 14b, respectively. These sliding portions 16a, 16b, 17a and 17b are in sliding contact with a plurality of balls 42 formed on a sliding hold member 40.

The upper rail 20 includes a base plate portion 21, an inside vertical portion 22a and an outside vertical portion 22b extending downwardly from the right and left ends of the base plate portion 21, a pair of connecting portions 23a and 23b extending in an outside upward direction with an inclination from the lower ends of the vertical portions 22a and 22b and a pair of rising portions 24a and 24b extending in an inside upward direction with an inclination from the outside ends of the connecting portions 23a and 23b. The upper rail 20 forms a slide mechanism together with the lower rail 10 for moving the vehicle seat in a vehicle front/rear direction relative to the vehicle floor. A recessed hole 29 is provided at the center portion of the upper rail 20 in a longitudinal direction of the vehicle and a transparent hole 25a is provided at the inside rising portion 24a opposing the lock hole 13a. Further, sliding portions 26a, 26b, 27a and 27b are formed at the center of connecting portions 23a and 23b, rising portions 24a and 24b to be in contact with the balls 42 of the sliding hold member 40. The sliding hold member 40 is provided between the lower rail 10 and the upper rail 20 for slidably holding the rails 10 and 20. The sliding hold member 40 includes a resin-made retainer 41 and the balls 42 rotatably held by the retainer. The retainer 41 is provided with a recess 41 a.

The slide lock mechanism 30 includes the lock holes 13a, lock lever 31 (as a lock member), a bracket 32 and a spring (not shown). The lock lever 31 is provided with a lock detent 31a to be engaged with the lock holes 13a at the lower portion thereof. A cooperative portion 31b is provided at the lock lever 31. The cooperative portion 31b is engaged with a pressing portion of the release lever for rotating the lock lever 31. Both ends of the lock lever in front/rear direction have a pair of rotation plates 31c provided integrally thereto. Each rotation plate 31c includes a recessed portion 31d having a hemisphere surface.

The bracket 32 includes a first bracket 33 and a second bracket 34 and fixed to the base plate 21 of the upper rail 20 at the upper area of the lower rail 10, The first and the second brackets 33 and 34 have supporting portions 33a and 34a provided integrally therewith, respectively for supporting the lock lever 31. Each supporting portion 33a and 34a includes a projection 33b and 34b respectively for engaging with the recessed portion 31d of the rotation plate 31c. The engagement of the projection 33b and 34b with the recessed portion 31d secure the lock lever 31 on the bracket 32. The lock detent 31a of the lock lever 31 engages with the lock holes 31a and is inserted into the transparent hole 25. The spring (not shown) urges the lock lever 31 in an engagement direction of the lock detent 31 a with the lock hole 13a.

The assembling of this seat structure is achieved by first assembling the upper rails 20, slide lock mechanism 30 and sliding hold mechanism 40 to the pair of lower rails 10 and then the pair of lower rails are assembled to the vehicle floor 100 with a predetermined distance.

The lock detent 31a is engaged with the lock hole 13a and the lower and the upper rails 10 and 20 are locked not to allow the relative movement. The lock lever 31 is always urged in the engagement direction with the lock hole 13a by a spring force of the spring.

The vehicle seat device further includes a reclining mechanism 80, the walk-in mechanism 60 and a seat lifter mechanism 70.

The reclining mechanism 80 is provided between the lower and upper frames 104 and 103 for relative reclining operation between the lower and the upper frames. The reclining mechanism 80 includes a dish shape upper gear 82 fixed to the upper arm 103 and having an inner toothed portion at inner peripheral portion and expanding towards the upper arm side, a lower plate 83 fixed to the lower frame 104 and having a dish shape with a recess portion opposing the recess portion of the upper gear 82, a hinge shaft 81 penetrating through the lower frame 104 and the upper frame 104, a pawl gear 84 and a cam member 85 disposed between the upper gear 82 and the lower plate 83, a spring 86 and a link member 87 supporting the upper gear 82 and the lower plate 83 to allow a relative rotation between the upper gear and the lower plate. A guide portion (not shown) is provided at the lower plate 83 for sliding the pawl gear 84 in a radial direction but restricting the movement in a peripheral direction. An outer-toothed portion (not shown) is provided at an outer peripheral portion of the pawl gear 84 to be engaged with the inner-toothed portion of the upper gear 82 for restricting the relative rotation with the upper gear 82. The cam member 85 forms a cam mechanism, which moves the pawl gear 84 in a radial direction according to the relative rotational position between the pawl gear 84 and the cam member 85. The cam member 85 is always urged by a spring 86 in a direction where the pawl gear 84 supported by the hinge shaft 81 for unitary rotation is forced to press the inner toothed portion of the upper gear 82. When the outer toothed portion of the pawl gear 84 engages with the inner toothed portion of the upper gear 82, the relative rotation between the pawl gear 84 and the upper gear 82 is restricted and accordingly the relative rotation between the upper gear 82 and the guide portion for guiding the pawl gear 84 and the lower plate 83 is restricted to secure the connection between the upper arm 103 to which the upper gear 82 is fixed and the lower frame 104 to which the lower plate 83 is fixed. Thus the relative movement between the seat back fixed to the upper arm 103 and the seat cushion fixed to the lower frame 104 is also restricted. The cam mechanism 85 is connected to a reclining lever (not shown) via the hinge shaft 81 and pawl gear 84 is disengaged from the inner-toothed portion of the upper gear 82 by the operation of the reclining lever. Accordingly, the restriction of the relative rotation between the pawl gear 84 and the upper gear 82 and the lower plate 83 is released to recline the seat back relative to the seat cushion.

The walk-in mechanism 60 is provided between the reclining mechanism 80 and the slide lock mechanism 30 for releasing the restriction of the movement of the lower frame 104 by operating the slide lock mechanism 30 in association with the reclining operation of the upper frame 103 (seat back). When the seat back is reclined more than a predetermined degree by the operation of the reclining mechanism 80, the slide lock mechanism 30 is released to release the locking condition between the upper rail 20 and the lower rail 10. The walk-in mechanism 60 includes a walk-in plate 61 rotatably supported on the hinge shaft 81 of the reclining mechanism 80, a first link 63 rotatably supported on a supporting shaft portion 71 of the lifter mechanism 70, a second link 67 rotatably supported on a supporting shaft 71b of the lifter mechanism 70, a connecting plate 66 supported by the first and the second links for connecting the first and the second links 63 and 67, a lock release plate 69 for pushing the lock lever at a tip end 69c in association with the second link 67, a spring 62 disposed between the second link 67 and the lock release plate 69 for urging the two members in an approaching direction and a release projecting portion 103a at the upper arm 103 and projecting from the arm in an axial direction of the hinge shaft 81. The projecting portion 103a becomes in contact with the projecting portion 61a of the walk-in plate 61 for rotating the plate 61 when the upper arm 103 is reclined more than the predetermined degree.

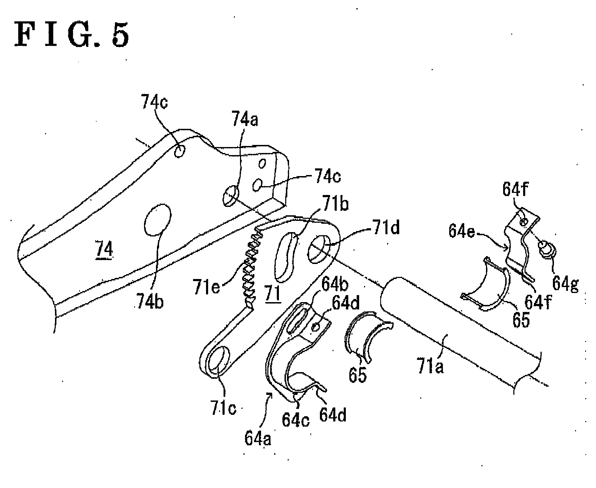

The walk-in plate 61 is a triangular shape plate rotatably supported on the hinge shaft 81. The walk-in plate 61 includes a projecting portion 61a at an apex of the triangle shape and a connecting projection 61b at another apex of the triangle shape. The projecting portion 61a is positioned for engagement with the release projection 103a of the upper arm 103 and the connecting projection 61b is positioned for inserting into a slide hole 64b of the first link 63. The first link 63 is rotatably supported on the supporting shaft member 71a of the lifter mechanism 70 as shown in Fig. 5. The first link 63 includes a main body portion 64a, a fixing member 64e and a sleeve 65. The main body portion 64a and the fixing member 64e are assembled and fixed together by rivet 64g. Accordingly, the main body portion 64a and the fixing member 64e are supported on the supporting shaft member 71a of the lifter mechanism 70 through the sleeve 65. The first link 63 (corresponding to link member of the walk-in mechanism) is divided into two parts in an outer peripheral direction of the supporting shaft member 71a, and accordingly, the assembling of the link 63 to the supporting shaft member 71a is easy to be achieved. The first link 63 includes a slide hole 64b for inserting therein the connecting projection 61b. The slide hole64b is an elongated hole extending from the supporting shaft of the first link 63 in a radial inclined rearward direction. The first link 63 further includes a connecting hole 64c rotatably supported on the connecting projection 66a. The direction in which the slide hole 64b is provided is in a direction perpendicular to the direction from the hinge shaft 81 to the connecting hole 64c. This forms the link mechanism for converting the peripheral movement of the walk-in plate 61 into the longitudinal movement of the connecting plate 66. The second link 67 has an approximately T-shape and supported on the supporting shaft 71b at the intersection point of the T-shape. The second link 67 is rotatably connected to the other end portion 66b of the connecting plate 66 at the lower end portion of the T-shape and is provided with a connecting projection 67a in which the slide hole 69c of the release plate 69 is inserted. The connecting projection 67a is provided at the left end of the T-shape to form a link mechanism for converting the longitudinal movement of the connecting plate 66 into the rotational movement. The spring 62 is provided between the upper portion 67b of the T-shape and the upper portion 69b of the release plate 69 for urging the two members in a compression direction. In other words, the second link 67 is always urged in a clockwise direction. The release plate 69 is of reverse T-shape and supported on the supporting plate 74 at the intersection point of the T-shape and a slide hole 69c is provided at the right end of the reverse T-shape for inserting therein the connecting projection 67a of the second link 67. Accordingly, the release plate 69 is rotated in a direction reverse to the rotation direction of the second link 67. When the release plate 69 is rotated in a counterclockwise direction, contacting the left end portion 69d of the reverse T-shape pushes the lock lever 31. The release plate 69 is always urged in a clockwise direction by the spring 62.

The lifter 70 is provided between the lower frame 104 and the upper rail 20 and includes rear leg portion 71, front leg portion 75, support plate 74 and the lower frame 104 to form a parallel link mechanism with four joints. The lifter mechanism 70 further includes lifter drive gear 72 and an operation lever (not shown) for operating the lifter drive gear 72. The lifter mechanism 70 functions to move the seat cushion (lower frame 104) in a vertical direction relative to the vehicle floor. The support plate 74 is fixed to the upper rail 20 and a lower end portion 75c of the front leg portion 75 is rotatably supported on the front end area of the support plate 74 and a lower end portion 71c of the rear leg portion 71 is rotatably supported on the rear end area. The lower frame 104 is a member for supporting the seat cushion and seat back of the seat and an upper end portion 75b of the front leg portion 75 is rotatably supported on the lower frame 104 at the front end area, whereas an upper end portion 71 d of the rear leg portion 71 is rotatably supported at the rear end area. The upper arm 103 is supported on the lower frame 104 at the rear end portion through the reclining mechanism 80. The rear leg portion 71 includes two parts, right and left parts, and these two parts are connected together by the supporting shaft member 71a as the shaft member. One part (in Fig. 5, only the right side is shown) of the rear leg portion 71 includes a toothed portion 71e for the lifter mechanism. The toothed portion 71e is of circular shape coaxial with the rotation center of the supporting shaft member 71a and is engaged with the lifter drive gear 72, which is supported by the lower frame 104. When the lifter drive gear 72 is rotated, the link member is operated. The support shaft member 71 a is extended in a width direction of the vehicle seat and at the both ends rotatably supported by the lower frame 104. The support shaft member 71a serves as one component of the lower frame 104 and helps to increase the strength of the seat structure.

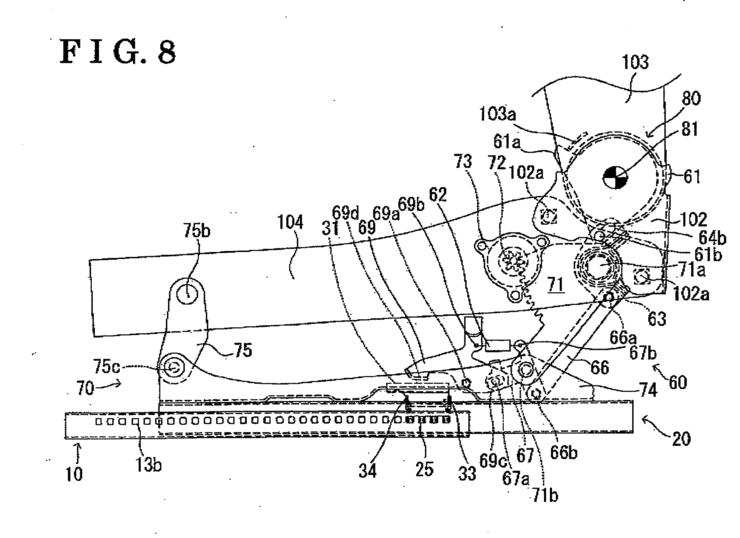

Next, the operation of the lifter mechanism 70 will be explained hereinafter. The operation handle operates the lifter mechanism 70. When the handle is rotated, the lifter drive gear 72 rotates and relatively moves the toothed portion 71e of the rear leg portion 71 in engagement therewith. For example, when the lifter drive gear 72 is rotated in clockwise direction, the rear leg portion 71 is rotated in counterclockwise direction about the supporting shaft member 71a. The angle between the lower frame 104 and the rear leg portion 71 becomes max as shown in Fig. 8 and the tetragon shape formed by the four members, lower frame 104, front leg portion 75, rear leg portion 71 and the support plate 74 becomes rectangular shape. The lower frame 104 moves uppermost position. When the lifter drive gear 72 is rotated in counterclockwise direction, the rear leg portion 71 is rotated in clockwise direction about the supporting shaft member 71a. The angle between the lower frame 104 and the rear leg portion 71 becomes the smallest as shown in Fig. 10 and the tetragon shape formed by the four members, lower frame 104, front leg portion 75, rear leg portion 71 and the support plate 74 becomes diamond shape. The lower frame 104 moves lowermost position. The support shaft member 71a moves in a vertical direction in accordance with the vertical movement of the lower frame 104 by the operation of the lifter mechanism 70.

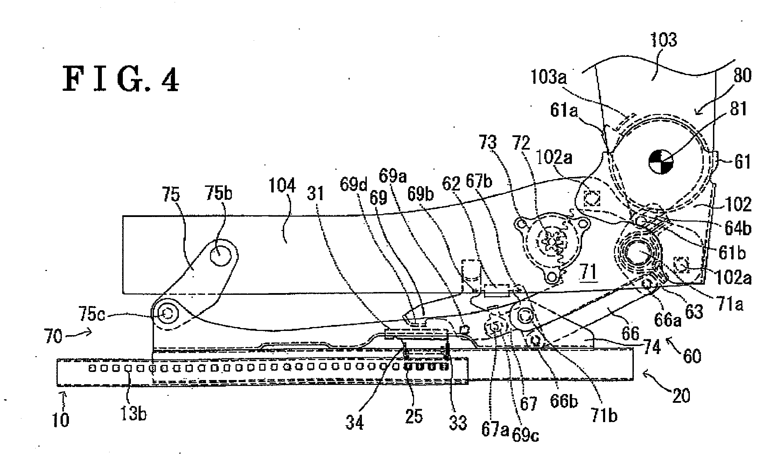

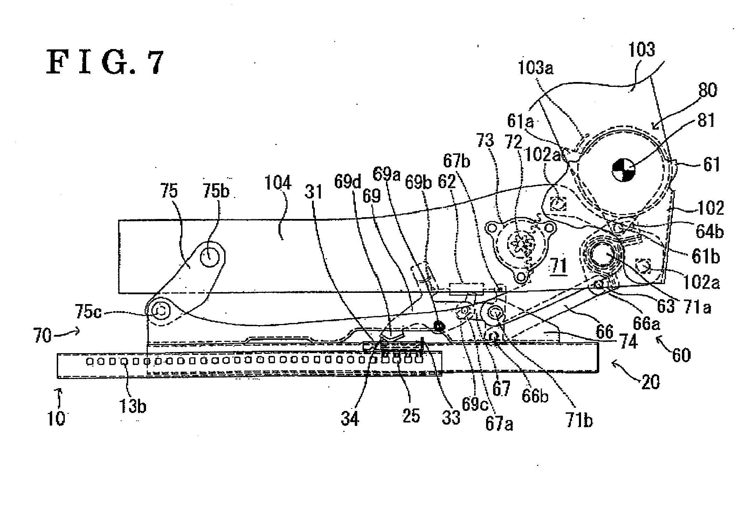

The walk-in mechanism 60 is actuated when the seat back (upper arm 103) is reclined to the front most position by operating the reclining mechanism 80. As shown in Fig. 4 or Fig. 7, the walk-in plate 61 is usually not restrained and is always urged in the clockwise direction by the spring 62. When the seat back is reclined to the frontward exceeding a preset angle, the release projection 103a at the upper arm 103 contacts with the projection 61a of the walk-in plate 61 to rotate the plate 61 in a counterclockwise direction.

As the results, the first link 63 is rotated in the clockwise direction to move the connecting plate 66 towards the other end 66b from the end 66a. Thus the second link 67 is rotated in a clockwise direction and the release plate 69 is rotated in the counterclockwise direction to press down the lock lever 31 by the tip end 69d of the release plate 69. Thus the slide lock mechanism 30 is released. By providing a spring member to urge the upper rail 20 frontward, the upper rail 20 (seat cushion, seat back) moves front upon release of the slide lock mechanism.

By returning the seat back to a normal position, the release projection 103a is moved away from the projection 61a of the walk-in plate 61. Then the release plate 69 is rotated in a clockwise direction by the spring force of spring 62 to release the engagement between the tip end 69d and the lock lever 31. The upper rail 20 and the lower rail 10 are again become locked condition by the slide lock mechanism.

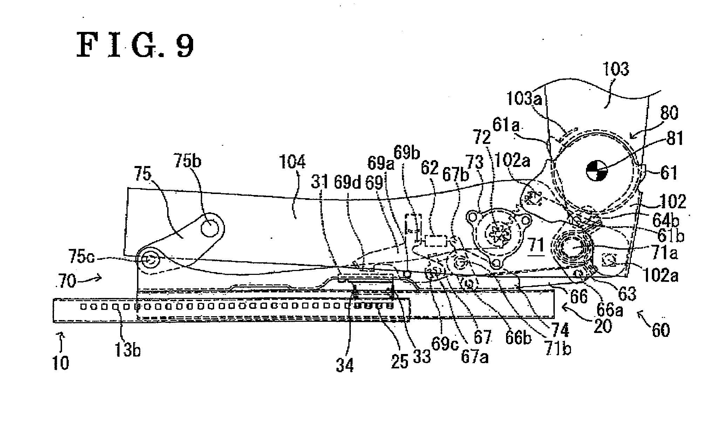

The seat cushion is positioned at the middle portion by the lifter mechanism 70 as shown in Fig. 4 or Fig. 7. However, this can be adjusted to a higher or lower position as shown in Fig. 8 or Fig. 9. These positions do not interfere the operation of the walk-in mechanism 60.

Even when the support shaft member 71a is vertically moved by the lifter mechanism 70, walk-in mechanism 60 can be operated, since the first link 63 and the support shaft member 71a are also vertically moved in accordance with the operation of the lifter mechanism. This is because the rotation shaft of the first link 63 is common to the support shaft member 71a. A parallelogram is formed by the rear leg portion 71, the first link 63, the second link 67 and the connecting plate 66 and the rotational position between the first link and the second link would not be interfered by the rotational position of the rear leg portion 71. Accordingly, the rotational movement of the rear leg portion 71b does not rotate the release plate 69 by the operation of the lifter mechanism 70. This will avoid the unnecessary releasing of the slide look mechanism 30 by the lock lever 31. According to the embodiment, the lifter mechanism supports the rear leg portion 71 by the support shaft member 71a. However, the support shaft member 71a may be formed as a part of the lower frame 104.
A seat device for a vehicle includes a lower frame, a slide mechanism (10, 20), a reclining mechanism (80) for supporting a seatback relative to a seat cushion with a reclined angle and holding the seatback to a predetermined position, a slide lock mechanism (30) for restricting the movement of the lower frame and holding a seat to a predetermined position relative to a vehicle floor and a walk-in mechanism (60) disposed between the reclining mechanism (80) and the slide lock mechanism (30) for releasing the restriction of the movement of the lower frame by operating the slide lock mechanism in association with the reclining movement of the seat. The walk-in mechanism (60) includes a first link (63) rotatably supported by the shaft member and operatively connected to the reclining mechanism (80) and the slide lock mechanism to transmit a power from the reclining operation of the seatback to the slide lock operation of the slide lock mechanism (30).

## Claims

1. A seat device for a vehicle comprising:
a lower frame (104) adapted to be mounted for supporting a seat cushion (101) and a seat back of a seat (101) and including a shaft member (71, 71a) extending in a width direction of the seat;
a slide mechanism (10, 20) adapted to be mounted between the lower frame (104) and a vehicle floor (100) for movably supporting the seat (101) in a front/rearward direction relative to the vehicle floor (100);
a reclining mechanism (80) adapted to be mounted between the lower frame (104) and the seat back (101) for supporting the seat back relative to the seat cushion with a reclined angle and holding the seat back to a predetermined position relative to the seat cushion;
a slide lock mechanism (30) mounted on the slide mechanism (10, 20) for restricting the movement of the lower frame (104) and holding the seat (101) to a predetermined position relative to the vehicle floor (100); and
a walk-in mechanism (60) disposed between the reclining mechanism (80) and the slide lock mechanism (30) for releasing the restriction of the movement of the lower frame (104) by operating the slide lock mechanism (30) in association with the reclining movement of the seat, the walk-in mechanism (60) including a first link (63) rotatably supported by the shaft member (71a) and operatively connected to the reclining mechanism (80) and the slide lock mechanism (30) to transmit a power from the reclining operation of the seat back to the slide lock operation of the slide lock mechanism (30).

2. A seat device for a vehicle according to claim 1, wherein the first link includes a link body (64a) and fixing member (64e) assembled to the link body (64a) and divided into two parts in an outer peripheral direction relative to the shaft member (71a).

3. A seat device for a vehicle according to claim 2, wherein the walk-in mechanism (60) further includes a walk-in plate (61) rotatably supported around a hinge axis of the reclining mechanism (80) and connected to the link body (64a) of the first link (63) and a second link 867) rotatably supported on an upper rail (20) of the slide mechanism (10, 20) and operatively connected to the slide lock mechanism (30) and the link body (64a).

4. A seat device for a vehicle according to claim 1, further comprising a lifter mechanism (70) having a link member (87) provided between the lower frame (104) and the slide mechanism (10, 20) and rotatably supported by the shaft member (71a) at the rear end of the lower frame (104) and connected to an upper rail (20) of the slide mechanism (10, 20), wherein the lifter mechanism (70) vertically movably supports the seat cushion (101) relative to the vehicle floor (100) by the rotation of the link member (87).

5. A seat device for a vehicle according to claim 3 further comprising a lifter mechanism having a link member (87) provided between the lower frame (104) and the slide mechanism (10, 20) and rotatably supported by the shaft member (71a) at the rear end of the lower frame (104) and connected to the upper rail (20) of the slide mechanism (10, 20) at a support shaft (71a) supporting the second link (67), wherein the lifter mechanism (70) vertically movably supports the seat cushion relative to the vehicle floor (100) by the rotation of the link member (87).
